# EUROPEAN PATENT APPLICATION

(11) **EP 1 876 355 A1**
(43) Date of publication of application: **09.01.2008**
(21) Application number: 06425472.5
(22) Date of filing: 07.07.2006
(51) Int. Cl.: F04B 53/10, F04B 9/107, F16K 15/04, F02M 63/02

(54) **High-pressure pump for feeding fuel to an internal combustion engine**

(71) Applicant: ROBERT BOSCH GMBH, 70442 Stuttgart (DE)
(72) Inventor: Caroli, Vittorio, 70124 Bari (IT); Cavallo, Angela, 74023 Grottaglie (IT); De Luca, Alessandro, 70057 Bari Palese (IT); Ficarella, Giuseppe, 70124 Bari (IT); Guarino, Rocco, 70010 Turi (IT); Loiudice, Nicola, 70022 Altamura (IT); Marino, Giuseppe, 70100 Bari (IT); Roncone, Massimiliano, Bitritto 70020 (IT)
(74) Representative: Jorio, Paolo

(57) **Abstract**

A high-pressure pump for feeding fuel to an internal combustion engine; the pump (1) having a pump housing (2); a fuel delivery duct (3); a delivery valve (4), which extends along an axis (A), is arranged along the delivery duct (3), and is provided with a seat (7); a shutter (15) mobile within the seat (7); a fastening member (16) suitable for being fastened to the pump housing (2) and sealing the seat (7) in a fluid-tight manner, a helical spring (17) suitable for biasing the shutter (15); and a bushing (20) which is arranged about the helical spring (17) for preventing curving of the helical spring (17), and is an integral part of the fastening member (16).

## Description

The present invention relates to a high-pressure pump for feeding fuel to an internal combustion engine.

In particular, the present invention relates to a high-pressure piston pump for feeding fuel to a common rail of an internal combustion engine.

A high-pressure pump of this type generally comprises a pump housing in which a fuel feeding duct, at least one cylinder connected to the feeding duct and one fuel delivery duct are made. The high-pressure pump further comprises a reciprocating mobile piston within the cylinder and a delivery valve arranged along the delivery duct.

The delivery valve used in this type of high-pressure pumps extends along a longitudinal axis, and comprises a seat; a fastening member suitable to be fastened to the pump housing and to close the seat in fluid-tight manner, a shutter and a helical spring, which is arranged along the longitudinal axis and is suitable for biasing the shutter. The helical spring is cyclically compressed between the fastening member and the shutter along the above-identified longitudinal axis.

The delivery valve allows the fuel flowing along the delivery duct when the fuel pressure in the delivery duct upstream of the delivery valve reaches a level capable of exerting a force on the shutter higher than the sum of the force exerted by the fuel pressure within the delivery duct downstream of the delivery valve and of the force of the helical spring acting on the shutter. In other words, the delivery valve opens at each stroke of the piston.

The helical spring, when it is compressed between the shutter and the fastening member, is subjected to curving, which, in turn, determines rotations of the spring about its longitudinal axis. In other words, the helical spring curves with respect to the longitudinal axis any time the axial load is applied. As a consequence of curving of the helical spring, the load is not aligned to the given axis any longer and a torque is applied to the helical spring. The torque causes the rotation of the helical spring about the longitudinal axis. It follows that the repeated rotations of the helical spring wear out the fastening member, and the shutter wears out the helical spring (usually the shutter is harder than the spring, and the spring is harder than the fastening member). Furthermore, the higher the fuel flow rates, the higher and more marked the above-identified wear phenomena.

Regarding this, it is relevant to observe that common rail systems are increasingly installed in commercial vehicles such as trucks or off-highway vehicles, because also this type of engine must comply with anti-pollution requirements. The high power of commercial vehicles entails that the fuel pumps must be capable of managing high flow rates which are the main cause of curving of the helical spring.

It is an object of the present invention to make a high-pressure pump for feeding fuel to an internal combustion engine which is free from the drawbacks of the known art with particular reference to the operation of the delivery valve at high flow rates and pressure up to 2200 bars.

According to the present invention, there is provided a high-pressure pump for feeding fuel to an internal combustion engine; the pump comprising a pump housing; a fuel delivery duct; a delivery valve, which extends along an axis, is arranged along the delivery duct, and comprises a seat; a shutter mobile within the seat; and a fastening member suitable for being fastened to the pump housing and sealing the seat in a fluid-tight manner, and a helical spring suitable for biasing the shutter; the pump being characterised by further comprising a bushing, which is arranged about the helical spring for preventing curving of the helical spring, and is an integral part of the fastening member.

According to the present invention, by preventing curving the bushing considerably reduces the tendency of the helical spring to rotate about its axis and, thus, the wear of the parts in contact. Furthermore, the bushing and the fastening member forms a single body so that the parts of the pump are not increased.

According to a preferred embodiment of the present invention the bushing and the helical spring can be snappingly fitted one another before inserting them in the seat.

In accordance with the above identified preferred embodiment the assembly of the pump is simplified.

For a better understanding of the present invention, a preferred embodiment will now be described only by way of a non-limitative example, and with reference to the accompanying drawings, in which:
- figure 1 is a sectional view with parts removed for clarity of a piston pump made according to a preferred embodiment of the present invention; and
- figure 2 is a sectional view of a detail of the pump shown in figure 1.

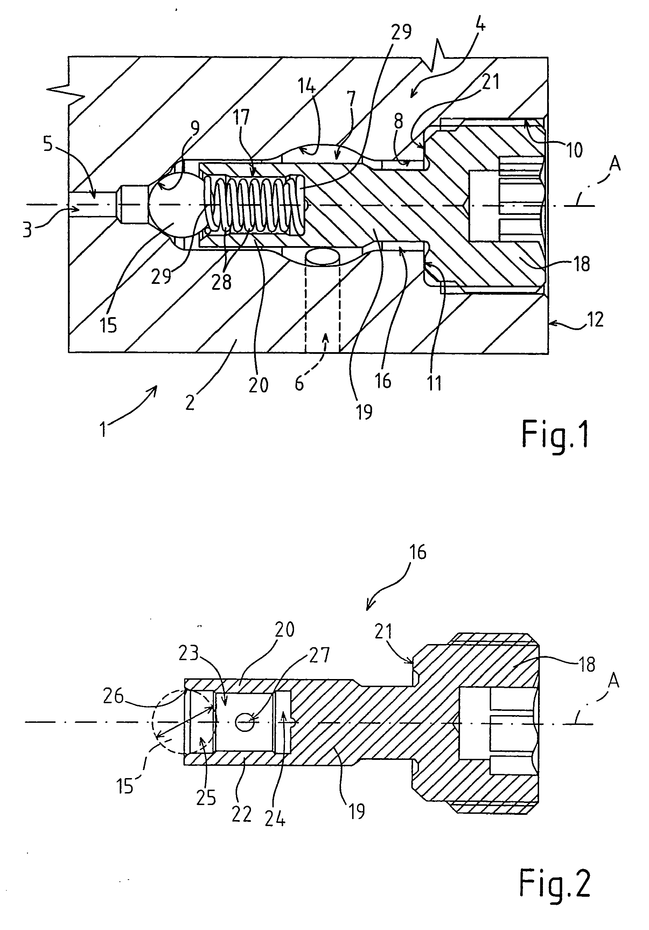

With reference to figure 1, reference numeral 1 indicates as a whole a high-pressure pump suitable for receiving fuel from a low pressure pump (not shown) and for compressing the fuel to pressures higher than 2200 bars for feeding the fuel itself to a common rail of an internal combustion diesel-engine not shown in the enclosed figures.

Pump 1 comprises a pump housing 2 essentially made of a block of metallic material, in which there are made a cylinder (not shown), a fuel feeding duct (not shown) to the cylinder (not shown), a fuel delivery duct 3; and a delivery valve 4 arranged along the delivery duct 3.

The delivery duct 3 comprises a hole 5 upstream of the valve 4, a hole 6 downstream of the valve 4. The valve 4 comprises a seat 7 formed in the pump housing between hole 5 and hole 6. Hole 5 and seat 7 extend in sequence about an axis A, while hole 6 extends radially with respect to axis A and departs from seat 7. Seat 7 is delimited by a hole 8 larger than hole 5 and coaxial with hole 5; a truncated cone face 9 arranged between hole 5 and hole 8; a hole 10, which is larger than hole 8, is coaxial with hole 8 and is arranged on the side of hole 8 opposite to the truncated cone face 9; and a shoulder 11, which is perpendicular to axis A and is arranged between hole 10 and hole 8. Hole 10 is adjacent to an outer face 12 of the pump housing 2 and is threaded at least partially. Seat 7 is further delimited by an annular vaulted depression 14 along hole 8 at the conjunction of seat 7 and hole 6.

The valve 4 comprises in addition to seat 7, a shutter 15 that in the embodiment shown in the figures is a hard material ball; a fastening member 16 and a helical spring 17 compressed between the fastening member 16 and shutter 15 for biasing the shutter 15 against the truncated cone-shaped surface 9.

Fastening member 16, helical spring 17 and shutter 15 are housed in the seat 7 and are arranged along axis A.

As better shown in figure 2, the fastening member 16 comprises a bolt 18 externally threaded, a shank 19 and a bushing 20 for housing and guiding the helical spring 17. Fastening member 16 is made of a single piece of material, preferably of metallic material. In other words, bolt 18, shank 19, and bushing 20 are a single body integrally made from a single piece. Fastening member 16 has an annular shoulder 21, which is arranged perpendicularly to axis A between shank 19 and bolt 18. Bushing 20 is cup-shaped and has a cylindrical wall 22 defining a cavity 23, in which is housed the helical spring 17 and a bottom wall defined by the distal end of shank 19. Cavity 23 enlarges at the bottom wall to form an annular depression 24 in the cylindrical wall 22 and in the proximity of free edge of the bushing 20 to form an annular depression 25 in the cylindrical wall 22. The free edge of the cylindrical wall 22 are internally chamfered to form a resting truncated cone-shaped surface 26 for the shutter 15. Cylindrical wall 22 is further provided with two openings 27 (only one shown in figure 2) for avoiding that the fuel in the bushing 20 be compressed by the shutter 15.

Helical spring 17 comprises a number of turns 28, which are sweeped ina progressive way with different pitches and have a substantially constant diameter; and two end turns 29 of larger diameter that are housed inside annular depression 24 and 25 respectively. Actually, helical spring 17 is snappingly fitted in the bushing 20 by nesting one of the end turn 29 in annular depression 24.

In use, the pump 1 cyclically feeds pressurised fuel along the delivery duct 3. When the fuel pressure in the hole 5 increases and overcomes the force exerted jointly by the fuel pressure in seat 7 and in hole 6 on the shutter 15 and by the bias of the helical spring 17, fuel pushes the shutter 15 directly against the bushing 20 abuttingly on the surface 26. At the same time, the helical spring 17 is compressed and the bushing 20 guides the helical spring 17 and avoids curving of the helical spring 17. It follows that the rotation of the helical spring 17 about the axis A is significantly reduced and, therefore, the wear of the spring 17 and of the fastening member 16 are minimized.

## Claims

1. A high-pressure pump for feeding fuel to an internal combustion engine; the pump (1) comprising a pump housing (2); a fuel delivery duct (3); a delivery valve (4), which extends along an axis (A), is arranged along the delivery duct (3), and comprises a seat (7); a shutter (15) mobile within the seat (7); and a fastening member (16) suitable for being fastened to the pump housing (2) and sealing the seat (7) in a fluid-tight manner, and a helical spring (17) suitable for biasing the shutter (13); the pump being **characterised by** further comprising a bushing (20), which is arranged about the helical spring (17) for preventing curving of the helical spring (17), and is an integral part of the fastening member (16).

2. Pump according to claim 1, **characterized in that** the fastening member (16) comprises a bolt (18) to be screwed in the pump housing (2) and the bushing (20); said bolt (18) and said bushing (20) forming a single body.

3. Pump according to claim 2, **characterized in that** the fastening member comprises a shank (19) arranged between the bolt (18) and the bushing (20); said bolt, said shank (19) and said bushing (20) forming a single body.

4. Pump according to any one of the foregoing claims, **characterised in that** the bushing (20) and the helical spring (17) can be snappingly fitted one another before inserting them in the seat (7).

5. Pump according to claim 4, **characterised in that** the fastening member (16) comprises a bolt (18) fastened to the pump body (2) and a shank (19) arranged between the bolt (18) and the bushing (20).

6. Pump according to any one of the foregoing claims, **characterised in that** the helical spring (17) has two end turns (29) arranged respectively on the opposite ends of the helical spring (17) and having a diameter larger than the substantially constant diameter of the remaining turns (28); each end turn (29) being adapted to being snappingly engaged in the bushing (20).

7. Pump according to claim 6, **characterised in that** the bushing (20) has an annular depression (24) suitable to house one of said end turn (29) and to fit the helical spring (17) to the bushing (20).

8. Pump according to any one of the foregoing claims, **characterised in that** the bushing (20) comprises a face (26) adapted to limit the stroke of the shutter (15) during the opening stroke of the delivery valve (4).

9. Pump according to any one of the foregoing claims, **characterised in that** the bushing (20) comprises a cylindrical wall (22), which is provided with at least a lateral opening (27).

10. Pump according to any one of the foregoing claims, **characterised in that** the bushing (20) is arranged in the seat (7) and is surrounded by a free space through which fuel flows.
